Europäisches Patentamt

European Patent Office

Office européen des brevets

(11) Veröffentlichungsnummer: **0 241 011 B1**

(12) # EUROPÄISCHE PATENTSCHRIFT

(45) Veröffentlichungstag der Patentschrift: **29.01.92**

(51) Int. Cl.⁵: **H04N 7/14**, H04N 5/268

(21) Anmeldenummer: **87105201.5**

(22) Anmeldetag: **08.04.87**

(54) Einrichtung zum Durchschalten von Farbfernsehsignalen.

(30) Priorität: **11.04.86 DE 3612276**

(43) Veröffentlichungstag der Anmeldung:
**14.10.87 Patentblatt 87/42**

(45) Bekanntmachung des Hinweises auf die
Patenterteilung:
**29.01.92 Patentblatt 92/05**

(84) Benannte Vertragsstaaten:
**CH DE FR GB IT LI**

(56) Entgegenhaltungen:
**EP-A- 0 063 639**
**DE-A- 3 303 011**
**NL-A- 8 400 115**

**ICC'84, IEEE INTERNATIONAL CONFERENCE
ON COMMUNICATIONS, 14.-17. Mai 1984, Amsterdam, NL, Band 1, Seiten 18-23, North-
Holland, Amsterdam, NL; P. KLEIN:
"Terminals for wideband communication"**

**SID INTERNATIONAL SYMPOSIUM DIGEST
OF TECHNICAL PAPERS, erste Auflage, Mai
1982, Seiten 22-23; Lewis Winner, Coral Gables, US; Y. ROBIN-CHAMPIGNEUL et al.:
"The french videophone set"**

**PATENT ABSTRACTS OF JAPAN, Band 5, Nr.
181 (E-83)[853], 20. November 1981; & JP-
A-56 109 075**

(73) Patentinhaber: **SIEMENS AKTIENGESELL-
SCHAFT
Wittelsbacherplatz 2
W-8000 München 2(DE)**

(72) Erfinder: **Seen, Manfred, Dipl.-Ing. (FH)
Sommerstrasse 18
W-8120 Weilheim(DE)**
Erfinder: **Schneider, Hans, Dipl.-Ing.
Wolfratshauser Strasse 215
W-8000 München 71(DE)**

**Beschreibung**

Die Erfindung betrifft eine Einrichtung zum Durchschalten von Farbfernsehsignalen nach dem Oberbegriff des Patentanspruchs 1.

An ein Breitbandnetz sollen unterschiedliche Video-Quellen und unterschiedliche Video-Senken angeschaltet werden. Die Video-Quellen sollen hierbei natürlich auch mit den Video-Senken eines Benutzers zusammenschaltbar sein. Video-Quellen sind beispielsweise eine Videokamera, ein Videorecorder, ein Fernsehtuner oder ein Video-Plattenspieler. Beispiele für Video-Senken sind der Fernsehempfänger oder ein Monitor, ein Videorecorder oder ein Kopiergerät. Sollen nun alle Video-Quellen mit allen Video-Senken verbunden werden können und natürlich auch an das Breitbandnetz anschaltbar sein, so ist es zunächst erforderlich, einheitlich codierte Farbfernsehsignale zu verwenden. Hierbei wird aus qualitativen Gründen nur ein in Komponenten aufgeteiltes Farbfernsehsignal in Frage kommen. Es ist bisher bekannt mit Hilfe eines mehrere Schaltebenen aufweisenden Koppelfeldes die Komponenten des Fernsehsignals zwischen Video-Quellen und Video-Senken und zum Breitbandnetz durchzuschalten. An das Koppelfeld werden hohe qualitative Anforderungen gestellt, um das Übersprechproblem befriedigend zu lösen. Ein einfacher C-MOS-Schalter reicht hierbei für einen Koppelpunkt nicht aus. In dem "Video-Handbuch" von Ru van Wezel, Franzis-Verlag München, 1977, ist ein Koppelpunkt eines Kreuzschienenverteilers auf Seite 124 dargestellt. Ein entsprechend aufgebautes Koppelfeld würde wegen der mehreren erforderlichen Ebenen einen erheblichen Aufwand bedeuten.

Aus der holländischen Offenlegungsschrift NL-A-8400115 ist ein Audio-/Videosystem bekannt, bei dem Quellen und Senken über Schalter an Zwei Busleitungen anschaltbar sind.

Aufgabe der Erfindung ist es, eine Einrichtung zum Durchschalten von Farbfernsehsignalen mit geringem Schaltungsaufwand anzugeben.

Diese Aufgabe wird durch die im Patentanspruch 1 angegebenen Merkmale gelöst.

Vorteilhafte Ausbildungen der Erfindung sind in den abhängigen Ansprüchen angegeben.

Erfindungsgemäß sind in der Einrichtung zum Durchschalten von Farbfernsehsignalen zwei Video-Busse vorgesehen. Auf den ersten Video-Bus wird ein von einer der Video-Quellen ausgesendetes Farbfernsehsignal - kurz als Videosignal bezeichnet - geschaltet. Liefert die Video-Quelle bereits die erforderlichen Komponenten, so ist allenfalls ein Verstärkersatz zur Pegelanpassung nötig. Sonst muß eine entsprechende Umcodierung in der entsprechenden Quellen-Anpassungsbaugruppe erfolgen. Dies gilt auch für die angeschalteten Video-Senken, die alle gemeinsam an den zweiten Video-Bus angeschlossen sind. Die Anschaltung der Video-Busse an das Breitbandnetz erfolgt über eine Umschaltbaugruppe, die es auch ermöglicht, beide Video-Busse miteinander zu verbinden. Anstelle eines aufwendigen Koppelfeldes ist jetzt nur je Quellen-Anschaltbaugruppe ein Schaltersatz und die Umschalt-Baugruppe mit mindestens drei Schnittstellen-Schaltersätzen erforderlich. Jeder Schaltersatz enthält hierbei soviel Schalter wie Komponenten des Farbfernsehsignals vorhanden sind. Entsprechendes gilt für die Verstärkersätze. Der besondere Vorteil dieser Einrichtung ist außer dem geringen Schaltungsaufwand die große Flexibilität bei den Anschlußmöglichkeiten von Quellen und Senken. Praktisch kann eine beliebige Anzahl von Quellen und Senken unterschiedlichster Art angeschaltet werden. Kundenspezifische Varianten lassen sich allein durch Variation der Senken- und Quellen-Anschaltbaugruppen herstellen.

Prinzipiell können mit dieser Einrichtung unterschiedlich codierte Farbfernsehsignale durchgeschaltet werden. So kann das Farbfernsehsignal beispielsweise in ein Luminanzsignal und zwei Farbdifferenzsignale zerlegt werden und in dieser Form durchgeschaltet werden.

Am vorteilhaftesten ist jedoch die Verwendung eines in die Komponenten Rot-, Grün-, Blau- und Synchronsignal zerlegten Farbfernsehsignals, das von einer Vielzahl von Video-Quellen bereits geliefert wird und bereits einer Vielzahl von Video-Senken zugeführt werden kann. Eine Umsetzung dieses mit RGBS bezeichnetes Signals in ein YUV-Signal ist unproblematisch und benötigt nur einen geringen Schaltungsaufwand.

Diese Einrichtung ermöglicht auch das Einblenden von Text- und Grafiksignalen, wie sie beispielsweise von einer Bildschirmtext-Quelle geliefert werden.

Mehrere Ausführungsbeispiele der Erfindung werden anhand von Figuren näher erläutert.

Es zeigen

Fig. 1 den Anschluß der Einrichtung zum Durchschalten von Videosignalen an ein Breitbandnetz,

Fig. 2 ein Ausführungsbeispiel der Einrichtung zum Durchschalten von Farbfernsehsignalen,

Fig. 3 eine Quellen-Anschaltbaugruppe und eine Senken-Anschaltbaugruppe zum Anschluß von analogen Videosignalen,

Fig. 4 eine erweiterte Umschaltbaugruppe zum Einblenden von Text- oder Grafiksignalen eines Text-Decoders und

Fig. 5 die erweiterte Umschaltbaugruppe mit einem dem Text-Decoder vorgeschalteten Umschalter.

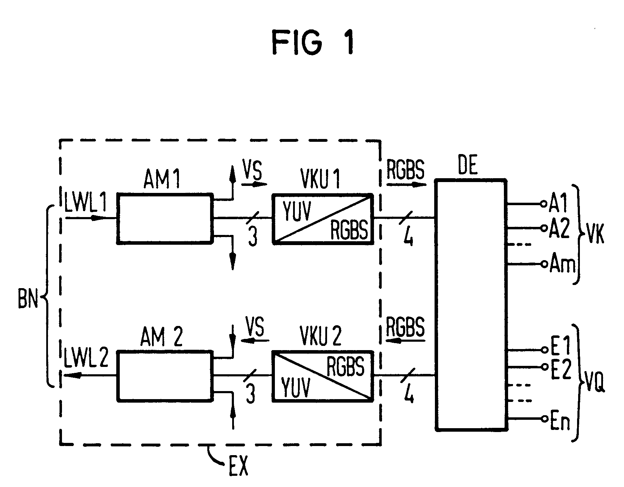

Bei den angegebenen Ausführungsbeispielen wird angenommen, daß auf den Video-Bussen Rot-, Grün-, Blau- und Synchronsignale anliegen, die hier kurz mit RGBS bezeichnet sind. In Fig. 1 ist der Anschluß der Einrichtung zum Durchschalten von Farbfernsehsignalen - kurz als Durchschalteinrichtung DE bezeichnet - dargestellt. Die Durchschalteinrichtung ist über Eingangsleitungen $L_E$ und $L_A$ an eine Codier- und Multiplexbaugruppe EX (externes System) angeschlossen, die beispielsweise über zwei Lichtwellenleiter LWL1 und LWL2 an das Breitbandnetz BN angeschlossen ist. Die über den ersten Lichtwellenleiter LWL1 empfangenen Signale werden zunächst einer Anschluß- und Demultiplexbaugruppe AM1 zugeführt. Das üblicherweise als Luminanzsignal und zwei Farbdifferenzsignale übertragene Videosignal VS wird einem ersten Videosignalkomponenten-Umsetzer VKU1 zugeführt, der an seinem Ausgang ein Videosignal abgibt, das die gewünschten Komponenten RGBS enthält. Das von der Durchschalteinrichtung an das Breitbandnetz abgegebene Videosignal enthält ebenfalls die Komponenten RGBS, die von einem zweiten Videosignalkomponenten-Umsetzer VKU2 in ein Luminanzsignal und zwei Farbdifferenzsignale umcodiert werden. Das entsprechend codierte Videosignal VS wird über eine Anschluß- und Multiplexbaugruppe AM2 über den zweiten Lichtwellenleiter LWL2 dem Breitbandnetz BN zugeführt. Auf der Benutzerseite der Durchschalteinrichtung DE sind n Eingänge E1 bis En vorgesehen, an die Video-Quellen VQ angeschaltet werden können und, ebenfalls sind mehrere Ausgänge A1 bis Am vorgesehen, an die Video-Senken VK angeschaltet werden.

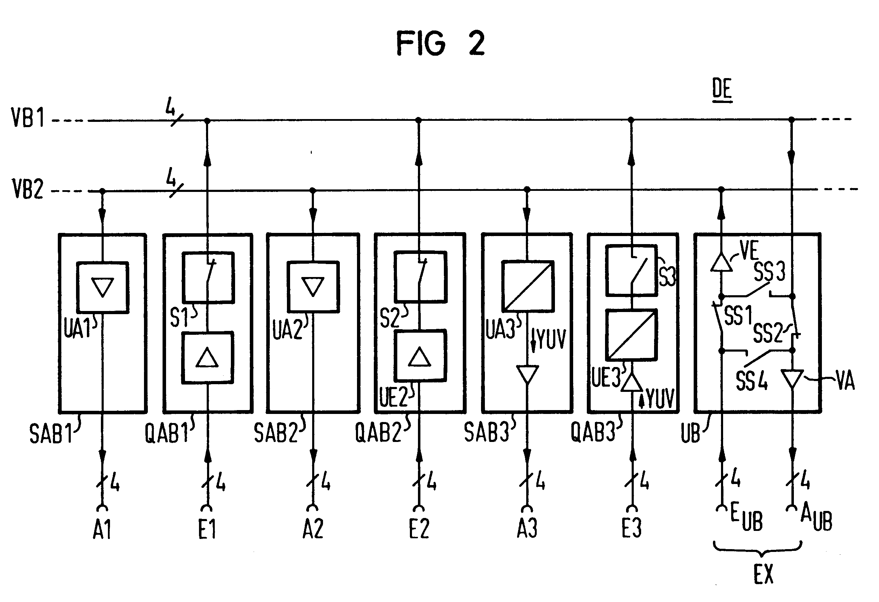

In Fig. 2 ist die Durchschalteinrichtung DE detailliert dargestellt. Sie enthält einen ersten Video-Bus VB1, an den die erforderliche Anzahl von Video-Quellen über QuellenAnschaltbaugruppen QAB1 bis QAB3 und einen zweiten Video-Bus VB2, an den eine beliebige Anzahl von Video-Senken über Senken-Anschaltbaugruppen SAB1 bis SAB3 angeschaltet ist. An einen ersten Video-Bus VB1 sind in diesem Ausführungsbeispiel drei Quellen-Anschaltbaugruppen QAB1 bis QAB3 angeschlossen. Jede dieser Quellen-Anschaltbaugruppen enthält einen Schaltersatz S1 bis S3, über den jeweils eine dieser Baugruppen an den ersten Video-Bus VB1 angeschaltet werden kann. Außerdem enthalten diese Baugruppen Eingangssignal-Anpassungsschaltungen UE1 bis UE3, die für die richtige Anpassung der Video-Quellen an die auf den Video-Bussen vorgeschriebenen Signale RGBS sorgen. Die Quellen-Anschaltbaugruppe enthält beispielsweise nur einen Verstärkersatz, der zur Pegelanpassung dient, wie bei den Eingangssignal-Anpassungsschaltungen QAB1 und QAB2; sie kann jedoch auch einen Verstärkersatz zur Pegelanpassung und einen Videosignalkomponenten-Umsetzer UE3 wie bei der dritten Quellen-Anschaltbaugruppe QAB3 enthalten.

An den zweiten Video-Bus VB2 sind in diesem Beispiel ebenfalls drei Senken-Anschaltbaugruppen SAB1 bis SAB3 direkt angeschaltet, an deren Ausgänge A1 bis A3 Video-Senken angeschaltet sind. Die Senken-Anpassungsbaugruppen SAB1 und SAB2 enthalten nur einen Verstärker UA1, UA2 zur Pegelanpassung während die dritte Senken-Anschaltbaugruppe SAB3 einen Videosignalkomponenten-Umsetzer UA3 mit nachgeschaltetem Verstärker zur Pegelanpassung enthält. Die Umsetzung von Videosignalen, die aus einem Luminanzsignal Y und zwei Farbdifferenzsignalen U,V bestehen, dürfte hierbei eine Ausnahme sein. An die Video-Busse ist eine Umschaltbaugruppe UB angeschaltet, deren Ausgangsleitungen $L_A$ und Eingangsleitungen $L_E$ mit der Codier- und Multiplexbaugruppe EX verbunden sind. Zwischen den Eingangsleitungen $L_E$ und dem zweiten Video-Bus VB2 liegt hierbei ein erster Schnittstellen-Schaltersatz SS1 mit nachgeschaltetem Eingangsverstärkersatz VE und zwischen dem ersten Video-Bus VB1 und den Ausgangsleitungen LA liegt ein zweiter Schnittstellen-Schaltersatz SS2 mit nachgeschaltetem Ausgangsverstärkersatz VA. Ein dritter Schnittstellen-Schaltersatz SS3 ermöglicht es, den ersten Video-Bus VB1 mit dem zweiten Video-Bus VB2 zu verbinden, und ein vierter Schnittstellen-Schaltersatz SS4 ermöglicht es, die Eingangsleitungen $L_E$ mit den Ausgangsleitungen $L_A$ zu einer Leitungsschleife zu verbinden. Je nach Pegelverhältnissen kann natürlich eine andere Anordnung des Eingangsverstärkersatzes VE und des Ausgangsverstärkersatzes VA notwendig sein; gegebenenfalls kann auf einen oder beide dieser Verstärkersätze verzichtet werden.

Über die Schaltersätze S1 bis S3 kann jeweils eine Video-Quelle auf den ersten Video-Bus VB1 geschaltet werden und über den dritten Schnittstellen-Schaltersatz SS3 auf den zweiten Video-Bus VB2 geschaltet werden, wodurch eine beliebige Verbindung zwischen Video-Quellen und Video-Senken des Benutzers möglich ist. Mindestens der Schnittstellen-Schaltersatz SS1 muß hierbei natürlich geöffnet sein.

Ebenso ist es möglich die Eingangsleitungen $L_E$ über den ersten Schnittstellen-Schaltersatz SS1 mit allen Video-Senken zu verbinden. Gleichzeitig kann eine beliebige Video-Quelle über den ersten Video-Bus VB1 und den zweiten Schnittstellen-Schaltersatz SS2 mit den Ausgangsleitungen $L_A$ verbunden werden, wodurch über die Codier- und Multiplexbaugruppe EX, die an die Eingänge $E_{UB}$ und die Ausgänge $A_{UB}$ der Umschaltbaugruppe UB angeschlossen ist, ein Vollduplexbetrieb möglich ist. Außerdem können bei geöffneten Schnittstellen-Schaltersätzen SS1 und SS2 (mindestens der Schnittstellen-Schaltersatz SS2 muß geöffnet sein) über den vierten Schnittstellen-Schaltersatz SS4 die Eingangsleitungen $L_E$ mit den Ausgangsleitungen $L_A$ verbunden werden.

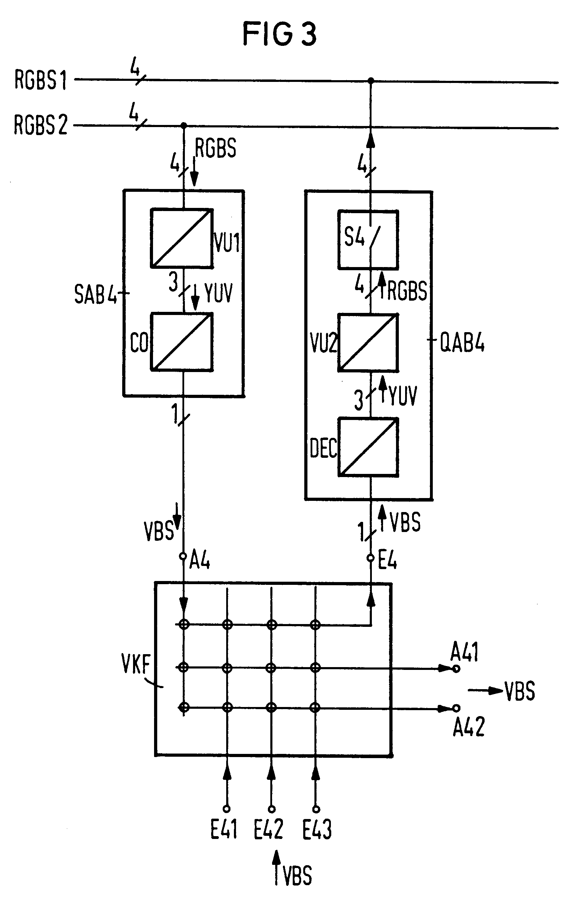

In Fig. 3 sind an den ersten Video-Bus VB1 eine vierte Quellen-Anschaltbaugruppe QAB4 und an den zweiten Video-Bus VB2 eine vierte Senken-Anschaltbaugruppe SAB4 angeschaltet. An dem Eingang E4 der vierten Quellen-Anschaltbaugruppe QAB4 liegt ein analoges Video-Basissignal VBS an, das beispielsweise der PAL-, der NTSC- oder der SECAM-Norm entspricht. In der Quellen-Anschaltbaugruppe QAB4 wird dies Video-Basissignal in ein RGBS-Signal umgesetzt. Dies erfolgt hier in zwei Schritten: zunächst wird das Video-Basissignal VBS einem Decoder zugeführt und in ein Luminanzsignal Y sowie zwei Farbdifferenzsignale U,V umgesetzt. In einem Videokomponenten-Umsetzer VU2 (oft kurz als Matrix bezeichnet) wird hieraus ein RGBS-Signal erzeugt. Natürlich ist auch die Verwendung eines entsprechenden Decoders (beispielsweise PAL-Decoder) möglich, der bereits ein RGBS-Signal abgibt.

In der vierten Senken-Anschaltbaugruppe SAB4 wird das RGBS-Signal zunächst einen Videokomponenten-Umsetzer VU1 zugeführt und in ein Luminanzsignal Y und zwei Farbdifferenzsignale U,V umgesetzt und anschließend einem Coder (beispielsweise PAL-Coder) zugeführt, der wiederum ein Video-Basissignal VBS erzeugt.

Selbstverständlich können mehrere dieser Anschaltbaugruppen an jeden Video-Bus VB angeschaltet werden. Da Coder und Decoder jedoch aufwendig sind, wird zweckmäßigerweise ein Vorkoppelfeld VKF vorgesehen, das dem Eingang E4 und dem Ausgang A4 vorgeschaltet ist. An die Eingänge E41 bis E43 und die Ausgänge A41 und A42 können jeweils Video-Quellen bzw. Video-Senken angeschaltet werden.

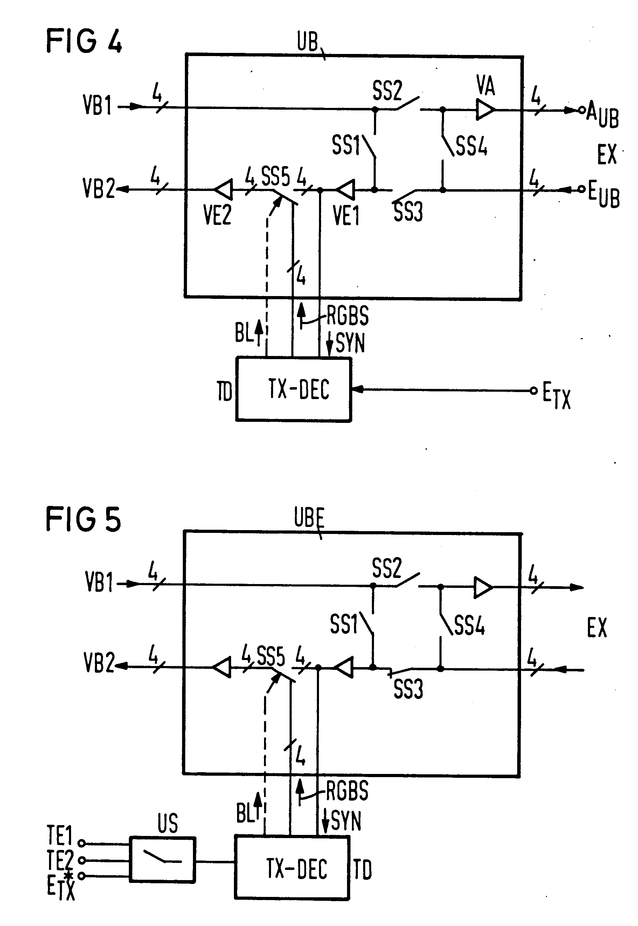

In Fig. 4 ist eine erweiterte Umschaltbaugruppe UBE dargestellt. Sie enthält zusätzlich einen Blanking-Umschaltersatz SS5, der zwischen dem Eingang $E_{UB}$ und dem zweiten Video-Bus VB2 dem dritten Schnittstellen-Schaltersatz SS3 nachgeschaltet ist und hier zwischen zwei Eingangsverstärkersätzen VE1 und VE2 liegt. Der Blanking-Umschaltersatz SS5 ist wahlweise an den dritten Schnittstellen-Schaltersatz SS3 (bzw. an den ersten Schnittstellen-Schaltersatz SS1) oder den Textausgang eines Textdecoders TD anschaltbar. Dem Textdecoder TD, der seine Information über einen Texteingang $E_{TX}$ erhält, wird vom Ausgang des ersten Eingangsverstärkers VE1 ein Synchronisiersignal SYN zugeführt, um eine Anpassung an das auf den zweiten Video-Bus VB2 durchgeschaltete Video-Signal zu erreichen. Über eine Steuerleitung gibt der Text-Decoder ein Blanking-Steuersignal BL ab, das dem Blanking-Umschaltersatz SS5 immer dann an den Textausgang des Textdecoders schaltet, wenn ein Buchstabe (genauer ein Teil eines Buchstabens) eingeblendet werden soll. Als Text-Decoder kommt beim jetzigen Stand der Technik zunächst ein Bildschirmtext-Decoder zur Anwendung, der ebenfalls ein RGBS-Signal abgibt. Es ist selbstverständlich, daß die Schnittstellen zwischen Textdecoder und der erweiterten Umschaltbaugruppe UW1 elektrisch und funktionsmäßig aneinander angepaßt sein müssen.

In Fig. 5 ist dem Texteingang $E_{TX}$ des Textdecoders ein Umschaltersatz US vorgeschaltet, der beispielsweise drei Eingänge TE1, TE2 und $E_{TX}^{*}$ aufweist. Über den Umschaltersatz kann der Text-Decoder auch an weitere Text- oder Video-Quellen angeschaltet werden, beispielsweise durch Anschalten an die Ausgänge A41, A42 des Vorkoppelfeldes VKF, wodurch die Möglichkeiten zur Texteinblendung (Bild in Bild) nochmals erweitert sind.

Bei allen Figuren ist die Anzahl der Verbindungsleitungen, Verstärker und Schalter durch Angabe einer Zahl an den Verbindungsleitungen gekennzeichnet.

Um Fehlbedienungen - beispielsweise das gleichzeitige Aufschalten von mehreren Video-Quellen auf den ersten Video-Bus VB1 - zu verhindern, ist es zweckmäßig, daß die Betätigung der Schaltersätze über einen Prozessor erfolgt, der die notwendigen Kontrollen durchführt und nur sinnvolle Durchschaltungen zuläßt.

**Patentansprüche**

1. Einrichtung zum Durchschalten von Farbfernsehsignalen zwischen einem Breitbandnetz (BN) und daran angeschlossenen Video-Quellen (VQ) und Video-Senken (VK),
   **dadurch gekennzeichnet**,
   daß ein erster Video-Bus (VB1) vorgesehen ist, an den mehrere Quellen-Anschaltbaugruppen (QAB1 bis QAB3) über Schaltersätze (S1 bis S3) anschaltbar sind,
   daß ein zweiter Video-Bus (VB2) vorgesehen ist, an den mehrere Senken-Anschaltbaugruppen (SAB1 bis SAB3) angeschaltet sind,
   daß eine Umschaltbaugruppe (UB) vorgesehen ist, deren Eingangsleitungen ($L_E$) und Ausgangsleitungen ($L_A$) an das Breitbandnetz (BN) geführt sind und über Schnittstellen-Schaltersätze (SS1,SS2,SS3) an die Video-Busse (VB1,VB2) anschaltbar sind,
   daß ein erster Schnittstellen-Schaltersatz (SS1) zwischen den Eingangsleitungen ($L_E$) und dem zweiten Video-Bus (VB2) eingefügt ist,
   daß ein zweiter Schnittstellen-Schaltersatz (SS2) zwischen dem ersten Video-Bus (VB1) und den Ausgangsleitungen eingeschaltet ist und

daß ein dritter Schnittstellen-Schaltersatz (SS3) zwischen dem ersten Video-Bus (VB1) und dem zweiten Video-Bus (VB2) eingefügt ist.

2. Einrichtung nach Anspruch 1,
**dadurch gekennzeichnet**,
daß die Umschaltbaugruppe (UB) zwischen den Eingangsleitungen ($L_E$) und den Ausgangsleitungen ($L_A$) einen vierten Schnittstellen-Schaltersatz (SS4) enthält.

3. Einrichtung nach Anspruch 1 oder Anspruch 2,
**dadurch gekennzeichnet**,
daß die Quellen-Anschaltbaugruppen (QAB) und die Senken-Anschaltbaugruppen (SAB) als Eingangssignal-Anpassungsschaltung (UE) bzw. Ausgangssignal-Anpassungsschaltung (UA) Verstärker (UE1,UA1) oder/und Videokomponenten-Umsetzer (UE3,UA3) enthalten.

4. Einrichtung nach einen der vorhergehenden Ansprüche,
**dadurch gekennzeichnet**,
daß Quellen-Anschaltbaugruppen (QA4) oder/und Senken-Anschaltbaugruppen (SA4) vorgesehen sind, die jeweils ein analoges Video-Basissignal (VBS) in Komponenten (RGBS) eines Videosignals umsetzen bzw. ein in Komponenten (RGBS) aufgeteiltes Videosignal in ein analoges Video-Basissignal (VBS) umsetzen.

5. Einrichtung nach Anspruch 4,
**dadurch gekennzeichnet**,
daß einem Eingang (E4) der Quellen-Anschaltbaugruppe (QA4) und einen Ausgang (A4) der Senken-Anschaltbaugruppe (SA4) ein Vorkoppelfeld (VKF) vorgeschaltet ist, das mehrere Eingänge (E41,E42,E43) und mehrere Ausgänge (A41,A42) aufweist.

6. Einrichtung nach einen der vorhergehenden Ansprüche,
**dadurch gekennzeichnet**,
daß auf den Video-Bussen (VB1,VB2) Rot-, Grün-, Blau-und Synchronsignale (RGBS-Signal) verarbeitet werden.

7. Einrichtung nach einem der vorhergehenden Ansprüche,
**dadurch gekennzeichnet**,
daß eine erweiterte Umschaltbaugruppe (UBE) vorgesehen ist, die zwischen Eingangsleitungen ($L_E$) und den zweiten Video-Bus (VB2) in Serie mit dem dritten Schnittstellen-Schaltersatz (SS3) einen Blanking-Umschaltersatz (SS5) aufweist, der zum Einblenden von Text- und Grafiksignalen an den Ausgang eines Text-Decoders (TD) umgeschaltet wird.

8. Einrichtung nach Anspruch 7,
**dadurch gekennzeichnet**,
daß ein Umschaltersatz (US) mit mindestens zwei Eingängen einen Texteingang ($E_{TX}$) des Text-Decoders (TD) vorgeschaltet ist.

**Claims**

1. Device for switching-through colour television signals between a broadband network (BN) and video sources (VQ) and video sinks (VK) connected thereto, characterised in that a first video bus (VB1) is provided to which several source connection assemblies (QAB1 to QAB3) can be connected via switch sets (S1 to S3), and in that a second video bus (VB2) is provided to which several sink connection assemblies (SAB1 to SAB3) are connected, in that a switch-over assembly (UB) is provided, the input lines ($L_E$) and output lines ($L_A$) of which are conducted to the broadband network (BN) and can be connected to the video buses (VB1,VB2) via interface switch sets (SS1,SS2,SS3), in that a first interface switch set (SS1) is inserted between the input lines ($L_E$) and the second video bus (VB2), in that a second interface switch set (SS2) is connected between the first video bus (VB1) and the output lines, and in that a third interface switch set (SS3) is inserted between the first video bus (VB1) and the second video bus (VB2).

2. Device according to Claim 1, characterised in that the switch-over assembly (UB) between the input lines ($L_E$) and the output lines ($L_A$) contains a fourth interface switch set (SS4).

3. Device according to Claim 1 or Claim 2, characterised in that the source connection assemblies (QAB) and the sink connection assemblies (SAB) contain amplifiers (UE1,UA1) or/and video component converters (UE3,UA3) as an input signal matching circuit (UE) and, respectively, an output signal matching circuit (UA).

4. Device according to one of the preceding claims, characterised in that source connection assemblies (QA4) or/and sink connection assemblies (SA4) are provided which in each case convert an analogue video base signal (VBS) into components (RGBS) of a video signal or, respectively, convert a video signal divided into components (RGBS) into an analogue video base signal (VBS).

5. Device according to Claim 4, characterised in that an input (E4) of the source connection assembly (QA4) and an output (A4) of the sink connection assembly (SA4) is preceded by a pre-switching matrix (VKF) which has a plurality of inputs (E41,E42,E43) and a plurality of outputs (A41,A42).

6. Device according to one of the preceding claims, characterised in that red, green, blue and synchronising signals (RGBS signal) are processed on the video buses (VB1,VB2).

7. Device according to one of the preceding claims, characterised in that an extended switch-over assembly (UBE) is provided which exhibits, between input lines (L$_E$) and the second video bus (VB2), in series with the third interface switch set (SS3), a blanking switch-over set (SS5) which is switched over to the output of a text decoder (TD) for inserting text and graphics signals.

8. Device according to Claim 7, characterised in that a switch-over set (US) having at least two inputs precedes a text input (E$_{TX}$) of the text decoder (TD).

**Revendications**

1. Dispositif pour transmettre directement des signaux de télévision en couleurs entre un réseau à large bande (BN) et des sources vidéo (VQ) et des récepteurs vidéo (VK),
qui sont raccordés à ce réseau, caractérisé par le fait
qu'il est prévu un premier bus vidéo (VB1), auquel plusieurs modules (QAB1 à QAB3) de raccordement de sources peuvent être raccordés par l'intermédiaire de jeux d'interrupteurs (S1 à S3),
qu'il est prévu un second bus vidéo (VB2), auquel plusieurs modules (SAB1 à SAB3) de raccordement de récepteurs sont raccordés,
qu'il est prévu un module de commutation (UB), dont les lignes d'entrée (L$_E$) et les lignes de sortie (L$_A$) sont raccordées au réseau à large bande (BN) et peuvent être raccordées, par l'intermédiaire de jeux d'interrupteurs d'interface (SS1,SS2,SS3), aux bus vidéo (VB1,VB2),
qu'un premier jeu d'interrupteurs d'interface (SS1) est inséré entre les lignes d'entrée (L$_E$) et le second bus vidéo (VB2),
qu'un second jeu d'interrupteurs d'interface (SS2) est inséré entre le premier bus vidéo (VB1) et les lignes de sortie, et
qu'un troisième jeu d'interrupteurs d'interface (SS3) est inséré entre le premier bus vidéo (VB1) et le second bus vidéo (VB2).

2. Dispositif suivant la revendication 1, caractérisé par le fait que le module de commutation (UB) situé entre les lignes d'entrée (L$_E$) et les lignes de sortie (L$_A$) comporte un quatrième jeu d'interrupteurs d'interface (SS4).

3. Dispositif suivant la revendication 1 ou 2, caractérisé par le fait que les modules (QAB) de raccordement de sources et les modules (SAB) de raccordement de récepteurs comportent, en tant que circuit (UE) d'adaptation des signaux d'entrée ou circuit (UA) d'adaptation des signaux de sortie, des amplificateurs (UE1,UA1) et/ou des convertisseurs de composantes vidéo (UE3,UA3).

4. Dispositif suivant l'une des revendications précédentes, caractérisé par le fait
qu'il est prévu des modules (QA4) de raccordement de sources et/ou des modules (SA4) de raccordement de récepteurs, qui convertissent respectivement un signal de base vidéo analogique (VBS) en des composantes (RGBS) d'un signal vidéo ou convertissent un signal vidéo subdivisé en composantes (RGBS) en un signal de base vidéo analogique (VBS).

5. Dispositif suivant la revendication 4, caractérisé par le fait
qu'en amont d'une entrée (E4) du module (QA4) de raccordement de sources et en amont d'une sortie (A4) du module (SA4) de raccordement de récepteurs est branché un champ de couplage amont (VKF) qui comporte plusieurs entrées (E41,E42,E43) et plusieurs sorties (A41,A42).

6. Dispositif suivant l'une des revendications précédentes, caractérisé par le fait
que les signaux rouge, vert, bleu et de synchronisation (signal RGBS) sont traités dans les bus vidéo (VB1,VB2).

7. Dispositif suivant l'une des revendications précédentes, caractérisé par le fait
qu'il est prévu un module étendu de commutation (UBE), qui comporte, entre des lignes d'entrée (L$_E$) et le second bus vidéo (VB2), en série avec le troisième jeu d'interrupteurs d'interface (SS3), un jeu de commutateurs de suppression (SS5), qui est commuté sur la sortie d'un décodeur de texte (TD), pour réaliser l'insertion de signaux de test et de graphiques.

8. Dispositif suivant la revendication 7, caractérisé par le fait qu'un jeu de commutateurs (US) comportant au moins deux entrées est branché en amont d'une entrée de texte ($E_{TX}$) du décodeur de texte (TD).

# FIG 1

# FIG 2

EP 0 241 011 B1

FIG 3

FIG 4

FIG 5

11